# NEUE EUROPÄISCHE PATENTSCHRIFT

(11) **EP 2 688 691 B2**
(45) Veröffentlichungstag und Bekanntmachung des Hinweises auf die Entscheidung über den Einspruch: **03.04.2019**
(45) Hinweis auf die Patenterteilung: 23.03.2016
(21) Anmeldenummer: 12714219.8
(22) Anmeldetag: 23.03.2012
(51) Int. Cl.: B21C 47/22, B21C 47/34, B23D 33/02

(54) **VORRICHTUNG UND VERFAHREN ZUR DICKBAND-PROBENENTNAHME**
APPARATUS AND METHOD FOR SAMPLING THICK STRIPS
DISPOSITIF ET PROCÉDÉ DE PRÉLÈVEMENT D'ÉCHANTILLONS DE BANDES ÉPAISSES

(30) Priorität: 23.03.2011 DE 102011014709; 08.06.2011 DE 102011103640
(43) Veröffentlichungstag der Anmeldung: 29.01.2014
(73) Patentinhaber: SMS Logistiksysteme GmbH, 57250 Netphen (DE)
(72) Erfinder: HOFMANN, Karl, Robert, 57250 Netphen (DE)
(74) Vertreter: Grosse, Wolf-Dietrich Rüdiger
(86) Internationale Anmeldenummer: PCT/EP2012/001277
(87) Internationale Veröffentlichungsnummer: WO 2012/126631

(56) Entgegenhaltungen:
- EP-A1- 0 497 182
- EP-A2- 0 044 923
- WO-A1-2006/111259
- DE-A1- 2 815 969
- DE-A1- 2 924 379
- DE-C- 659 080
- FR-A- 1 499 337
- GB-A- 2 068 796
- NL-A- 8 402 804
- US-A- 2 965 328

## Beschreibung

### 1. Gebiet der Erfindung

Die Erfindung betrifft eine Vorrichtung sowie ein Verfahren zur Probenentnahme von gewalzten und zu einem Coil aufgewickelten Metallbändern, insbesondere im Dickenbereich von > 12 mm, gemäß dem Oberbegriff des Anspruchs 1 bzw. 11 (siehe WO-A1-2006/111259).

Moderne Blechwalzwerke stellen Bleche her, welche aufgewickelt als Coils bezeichnet werden. Zur Überwachung der Stahlgüte werden üblicherweise vom Bandanfang oder Bandende Probestücke entnommen. Bis zu einem mittleren Dickenbereich von ca. 12 mm gibt es hierzu automatisierte Inspektionsanlagen und Probeentnahmestationen. Probenahmen im oberen Blechdickenbereich von >12 mm (bis ca. 25 mm) erfolgen häufig mit Hilfe einfacher Muldenrollenstationen, in denen das Coil gedreht werden kann. Das Probestück wird dann mittels eines manuellen Brennschnitts gewonnen. Diese Verfahren haben jedoch den Nachteil, dass sie für den Bediener gefährlich sind, da die Bandenden aufgrund ihrer Steifigkeit und Elastizität herumschlagen können, das Coil aus der Muldenrollenstation herausrollen kann, und dass die Leistungsfähigkeit (nämlich die Anzahl der Proben pro Zeiteinheit) einer solch einfachen Station durch den großen Zeitaufwand gering ist.

In einem modernen Walzwerk werden unterschiedliche Stahlgüten verarbeitet, die grob in drei Grundgruppen eingeteilt werden können. Zum ersten sind dies normale, zumeist heißgewickelte Baustähle, die beim Aufwickeln plastisch verformt werden. Ein freier Bandschlappen liegt praktisch am Coil an. Wenn das Bandende beispielsweise in eine Schere eingeführt werden soll, muss das Bandende vom Coil abgeschält werden. Zum zweiten sind dies hochfeste Feinkornbaustähle, die thermomechanisch gewalzt im mittleren Temperaturbereich aufgewickelt werden. Durch die hohe Festigkeit des Stahls sind die Bleche nur teilplastisch verformt. Ein freier Bandschlappen stellt sich mit einem größeren Durchmesser etwas vom Coil ab. Zum Dritten sind die verwendeten Stahlgüten ultrahochfeste Stähle, die im Walzprozess vergütet werden und extrem hohe Festigkeiten besitzen. Diese Werkstoffe mit zugehörigen Banddicken von maximal nur etwa 15 mm werden beim Aufwickeln nur elastisch gedehnt. Ein freier Bandschlappen nimmt daher nach dem Lösen der Coilumreifung wieder seine voll gestreckte, gerade Form aus der Walzstraße an.

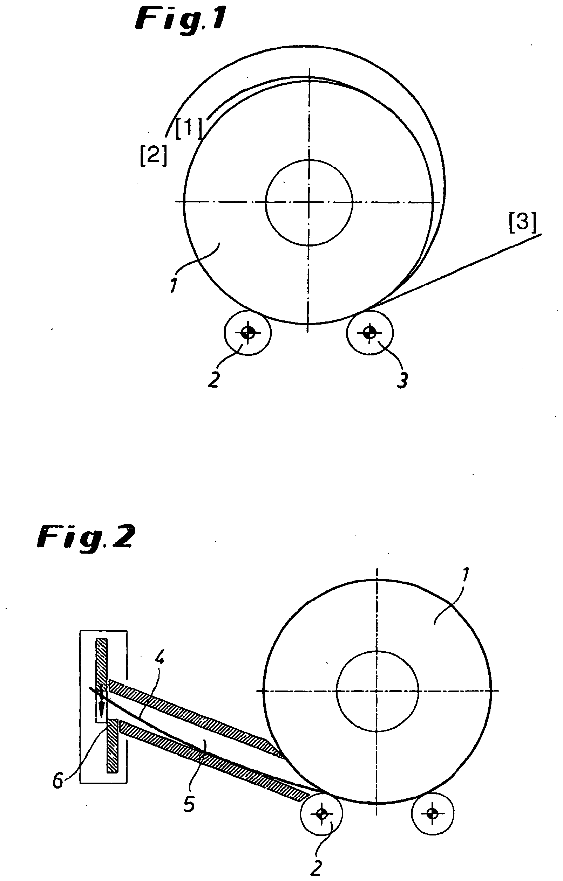

Figur 1 zeigt das Verhalten der oben erwähnten drei unterschiedlichen Stahlgüten in einer typischen Muldenrollenstation. Das Coil 1 ist auf zwei Muldenrollen 2, 3 abgesetzt und die Coilumreifung wurde bereits gelöst. Das freie Ende des normalen Baustahls, dargestellt mit [1], liegt eng an der Außenwand des Coils an, während die teilplastisch gewickelten hochfesten Stähle, dargestellt durch [2], in ihrem freien Ende ab dem Bereich rechts neben der rechten Muldenrolle 3 auffedern und sich entsprechend von der Außenseite des Coils 1 ablösen. Schließlich federt der ultrahochfeste Stahl aufgrund seiner rein elastischen Wicklung im Coil, dargestellt durch [3], vollständig nach dem Lösen der Coilumreifung in seine gerade Ursprungsform zurück.

Aus der Praxis sind daher bereits Probenentnahmestationen bekannt, bei denen das Band durch zwei Führungen in die Trennanlage, z. B. eine Schere oder einen Plasma-brenner, geführt wird. Hier erfährt das Band der Typen [1] und [2] eine plastische Verformung, bei der das abgewickelte Bandende stark gebogen wird und durch dieses Biegemoment das Coil angehoben werden kann, so dass eine Andrückrolle erforderlich werden kann. Zudem ist es beim Aufwickeln nicht mehr möglich, das Bandende wieder komplett an das Coil heranzubiegen. Eine derartige Anlage gemäß dem Stand der Technik ist in Figur 2 dargestellt. Das freie Ende des zu einem Coil 1 gewickelten Metallbandes 4 wird durch einen Bandkanal 5 von der Außenseite des Coils 1 abgeschält und dann zwangsweise einer Schere 6 zugeführt.

Bei dieser Arbeitsweise entstehen durch den großen Zwang entsprechend große Kräfte, die von der Konstruktion aufgenommen werden müssen. Diese Kräfte bedingen zudem eine große Verformungsarbeit und somit sehr hohe Antriebsleistung in der Muldenrollenstation. Das Coil muss zudem durch zusätzliche andere Rollen stabilisiert werden und / oder benötigt große andere Rollenkräfte, um die Abwickelleistung in das Coil eintragen zu können. Schließlich wird das Band an den Krafteinleitungsflächen geschoben / gerieben und in Kombination mit den großen Stützkräften werden hierbei die Bandoberflächen beschädigt.

Aus der Praxis sind weitere Bauarten bekannt, beispielsweise die Lagerung des Coils auf einem Haspeldorn in Kombination mit verschiedenen Bundöffnersystemen, die aber alle gemeinsam dadurch gekennzeichnet sind, dass das Band mit einer großen Krümmung und somit unter den oben genannten Nachteilen in die Trennanlage geführt wird.

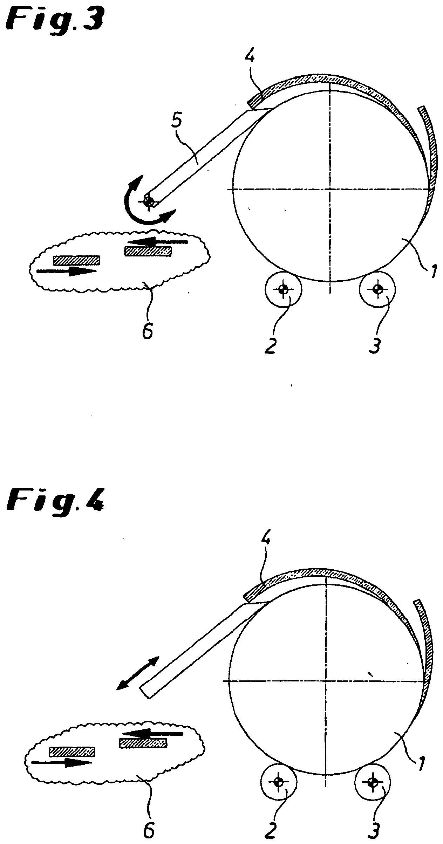

In den Figuren 3 und 4 sind neuere Entwicklungen auf diesem Gebiet dargestellt. Nach dem Transport des Coils in die Muldenrollenstation, umfassend die Rollen 2, 3, wird die Coilumreifung üblicherweise mittels eines Meißels am Ende des Schwenktisches entfernt. Unmittelbar nach dem Entfernen der Coilumreifung folgt dann wie eingangs bereits beschrieben die Auffederung des Bandes, deren Ausmaß sowohl vom Walzprozess als auch von der gewalzten Stahlgüte abhängt. Durch Rotation des Coils 1 durch Drehung der Muldenrollen 2, 3 erfolgt dann ein Einschub des Bandes in die Schere 6 und ein Ablängen des Bandes zur Probenentnahme. Das vorauseilende Ende 4 des Bandes wird mittels einer Führungseinrichtung von der Außenseite des Coils 1 abgelöst und in Richtung auf die Schere 6 hin geführt. Da bei unterschiedlichen Coildurchmessern durchgehend die gewünschte Wirkung entfaltet werden muss, kann die Führungseinrichtung 5 vorzugsweise schwenkbar (Figur 3) oder translatorisch verschiebbar (Figur 4) in den Zwischenraum zwischen dem vorauseilenden Bandende 4 und der Außenseite des Coils 1 angestellt werden.

### 2. Aufgabe der Erfindung

Es war daher ausgehend von dem oben beschriebenen Stand der Technik eine Aufgabe der Erfindung, eine Vorrichtung sowie ein Verfahren zur Probenentnahme von gewalzten und zu einem Coil aufgewickelten Metallbändern, insbesondere im Dickenbereich von >12 mm, anzugeben, durch die die Probenentnahme auch von dicken Bändern und vorzugsweise sämtliche Stahlgüten automatisiert und ohne die Gefahr der Beschädigung der Bandenden oder Gefahren für die Bediener ermöglicht wird. Diese Aufgabe wird mittels einer Vorrichtung, umfassend die Merkmale des Anspruchs 1 sowie eines Verfahrens, umfassend die Merkmale des Anspruchs 11, gelöst. Vorteilhafte Ausgestaltungen der Erfindung sind in beiliegenden Ansprüchen definiert.

### 3. Zusammenfassung der Erfindung

Im erfindungsgemäßen Sinne erfolgt die Probenentnahme von gewalzten Metallbändern, insbesondere im Dickenbereich oberhalb von 12 mm, wobei von dem nach dem Walzen zu einem Bund oder Coil aufgewickelten Metallband durch eine Bunddreheinrichtung eine Bandlänge abgewickelt und zur Probenentnahme einer Teillänge einer Trenneinrichtung zugeführt wird. Das Coil wird mit einem auch während des Abwickelns bleibenden freien radialen Abstand zu einem in Richtung des Bundes anstellbaren, sich von dem in Abwickelrichtung unteren Quadranten des Bundes bis vor die Trenneinrichtung erstreckenden Außenführung, vorzugsweise einem Außenkäfig der Bunddreheinrichtung, auf die Bunddreheinrichtung abgelegt.

Die Erfindung weist eine Coildreheinrichtung auf, die eine drehbare Aufnahme, vorzugsweise Muldenrollen, umfasst, welche dem unteren Quadranten eines auf der Coildreheinrichtung aufliegenden Coils zugeordnet sind. Als unterer Quadrant des Coils wird derjenige Teilumfang des Coils verstanden, welcher vom Mittelpunkt des Coils nach unten in Schwerkraftrichtung ausgerichtet ist. Die Auflagen der Coildreheinrichtung sind somit in einem Umfangsbereich von +/- 45° zur vertikalen Schnittebene durch das Coil angeordnet, wobei Abweichungen aus diesem 90°-Winkel von weiteren 15° zu jeder Seite als ebenfalls dem unteren Quadranten zugeordnet angesehen werden.

Von dem Bund wird oberschlägig ein Bandabschnitt weitestgehend zwangsfrei, mit einer mindestens 180°, vorzugsweise wenigstens 200°, des Teilumfangs des Bundes entsprechenden Länge, abgewickelt und der Trenneinrichtung zugeführt, wobei die Außenführung, vorzugsweise der Außenkäfig, mit reibungsmindernden Mitteln ausgestattet ist. Somit kann die Probenentnahme eines Metallbandes generell automatisiert und ohne die Gefahr der Beschädigung des vorauseilenden Endes des Metallbandes ausgeführt werden, wobei die Außenführung als obere Führung von Metallbändern des ultrahochfesten Typs [3] und die untere Führung in Form wenigstens eines anstellbaren Elements zum Einführen des vorauseilenden Endes in die Trennvorrichtung vor allem bei Metallbändern des normalen Baustahltyps [1] und hochfesten Typs [2] zum Einsatz gelangt.

Somit stellt die Erfindung eine Vorrichtung und ein Verfahren zur Verfügung, mittels derer sämtliche üblicherweise zu Coils aufgewickelte Stahlgüten in Dickenbereichen oberhalb von 12 mm sicher automatisiert einer Probenentnahme zugeführt werden können.

Das Abwickeln von Coils im elastischen Dehnungsbereich des Bandes zur Reduktion der erforderlichen Kräfte und zur Vermeidung eines abstehenden Bandschlappens gelingt durch die Anordnung der drehbaren Auflage für die Coils innerhalb der Coildreheinrichtung im unteren Quadranten des Coils und die in Abwickelrichtung im Quadranten vor der ersten Auflage angeordneten Trennvorrichtung, wodurch ein langes, weitestgehend zwangsfrei geführtes Bandende bereitgestellt wird, so dass nur eine geringe Krümmung des Bandes erfolgt, um dieses in die Trennvorrichtung einführen zu können. Zur Vermeidung von Oberflächenbeschädigungen erfolgt die Förderung des abgewickelten Metallbandes zudem entlang von reibungsarmen Führungselement in die Trennvorrichtung, beispielsweise eine Schere.

### 4. Kurze Beschreibung der Zeichnung

Die Erfindung und ihr Hintergrund werden im Folgenden unter Beweis auf eine Reihe von Figuren näher erläutert. Diese Figuren zeigen
- Figur 1: eine Seitenansicht einer Muldenrollenstation gemäß dem Stand der Technik,
- Figur 2: eine Seitenansicht einer weiteren Muldenrollenstation gemäß dem Stand der Technik,
- Figur 3: eine Seitenansicht einer weiteren Muldenrollenstation gemäß dem Stand der Technik,
- Figur 4: eine Seitenansicht einer Muldenrollenstation gemäß dem Stand der Technik,
- Figur 5: eine Seitenansicht einer Vorrichtung zur Probenentnahme gemäß einer ersten Ausführungsform der Erfindung,
- Figur 6: eine schematische Ansicht eines anstellbaren Elements gemäß der Erfindung,
- Figur 7: eine Seitenansicht eines weiteren anstellbaren Elements gemäß der Erfindung,
- Figur 8: eine Seitenansicht einer zweiten Ausführungsform eines anstellbaren Elements gemäß der Erfindung,
- Figur 9: eine Seitenansicht eines weiteren anstellbaren Elements gemäß der Erfindung,
- Figur 10: eine Seitenansicht einer dritten Ausführungsform eines anstellbaren Elements gemäß der Erfindung,
- Figur 11: eine Seitenansicht einer weiteren Ausführungsform eines anstellbaren Elements gemäß der Erfindung,
- Figur 12: eine Seitenansicht einer weiteren Ausführungsform des anstellbaren Elements gemäß Figur 10,
- Figur 13: eine Seitenansicht einer weiteren Ausführungsform des anstellbaren Elements gemäß Figur 11,
- Figur 14: die schematische Darstellung der möglichen Schwingung des anstellbaren Elements gemäß den Figuren 12 und 13,
- Figur 15: eine schematische Seitenansicht einer zweiten Ausführungsform der Vorrichtung zur Probenentnahme gemäß der Erfindung,
- Figur 16: eine schematische Seitenansicht einer dritten Ausführungsform einer Vorrichtung zur Probenentnahme gemäß der Erfindung,
- Figur 17: eine schematische Seitenansicht einer vierten Ausführungsform einer Vorrichtung zur Probenentnahme gemäß der Erfindung,
- Figur 18: eine schematische Seitenansicht einer Modifikation der vierten Ausführungsform gemäß Figur 17,
- Figur 19: eine schematische Darstellung der Schwingungsmodi der erfindungsgemäßen Vorrichtung gemäß Figur 18,
- Figur 20: eine schematische Seitenansicht einer fünften Ausführungsform der Vorrichtung zur Probenentnahme gemäß der Erfindung,
- Figur 21: eine schematische Seitenansicht einer sechsten Ausführungsform der Vorrichtung zur Probenentnahme gemäß der Erfindung,
- Figur 22: eine schematische Seitenansicht einer siebten Ausführungsform der Vorrichtung zur Probenentnahme gemäß der Erfindung,
- Figur 23: eine schematische Seitenansicht einer achten Ausführungsform der Vorrichtung zur Probenentnahme gemäß der Erfindung,
- Figur 24: eine schematische Darstellung einer teilbaren Außenführung gemäß der Erfindung,
- Figur 25: eine schematische Seitenansicht einer teilbaren Außenführung gemäß der Erfindung in einer weiteren Ausführungsform,
- Figur 26: eine schematische Seitenansicht einer teilbaren Außenführung gemäß der Erfindung in einer weiteren Ausführungsform,
- Figur 27: eine schematische Seitenansicht einer teilbaren Außenführung gemäß der Erfindung in einer weiteren Ausführungsform,
- Figur 28: eine schematische Seitenansicht einer neunten Ausführungsform der Vorrichtung zur Probenentnahme gemäß der Erfindung,
- Figur 29: eine schematische Seitenansicht einer zehnten Ausführungsform der Vorrichtung zur Probenentnahme gemäß der Erfindung.

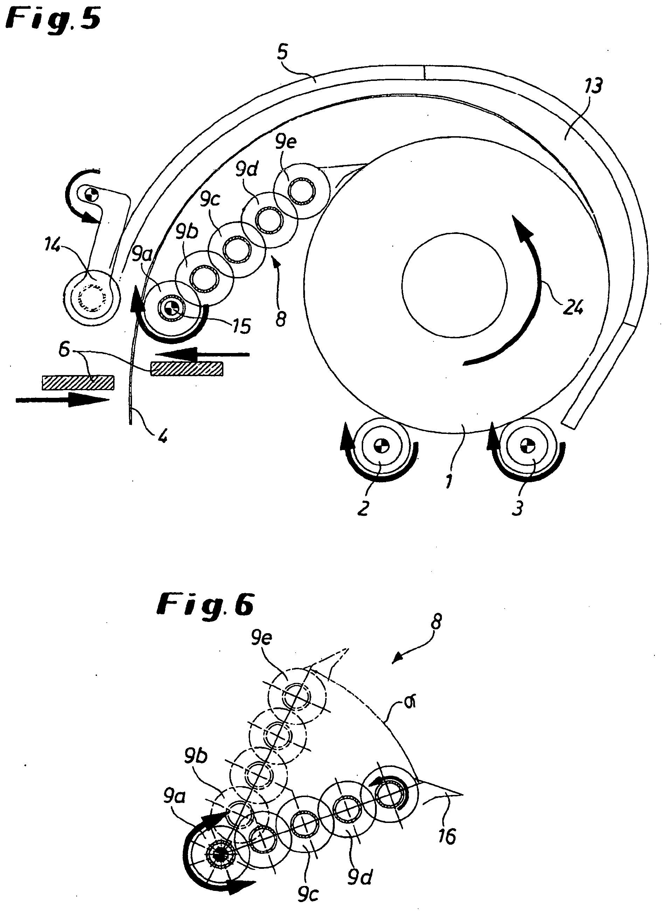

Figur 5 zeigt ein auf zwei Muldenrollen 2, 3 abgelegtes Coil 1, welches in Richtung des Pfeils 24 abgewickelt und auf die Schere 6 hin transportiert wird. Das vorauseilende Ende des Bands 4 verläuft innerhalb des Raums 13 zwischen der Außenseite des Coils 1 und der Innenseite des Außenkäfigs 5 und wird mittels des anstellbaren Elements 8 und einer schwenkbar gelagerten Treiberrolle 14 gezielt zwischen die Scherblöcke der Schere 6 eingeführt. Das anstellbare Element 8 weist in dieser Ausführungsform fünf in Reihe angeordnete Rollen 9a - e auf, von denen die der Schere 6 am nächsten angeordnete Rolle 9a ortsfest und drehbar gelagert ist, während die anderen Rollen 9b - 9e um die Achse 15 schwenkbar innerhalb der Vorrichtung gelagert sind.

Figur 6 zeigt die schwenkbare Anordnung des anstellbaren Elements 8 aus Figur 5 mit den um die Schwenkachse 15 drehbar gelagerten Rollen 9a - 9e, die in Reihe auf einem Rollentisch angeordnet sind und über den Schwenkwinkel α aus der (gestrichelt dargestellten) Ausgangsposition in die Betriebsposition schwenkbar sind. Der Rollentisch weist zudem ein Abschälelement 16 zum etwaigen Lösen eines am Coil anliegenden Bandendes und Einführen desselben in die Trennvorrichtung auf. Hierdurch wird eine reibungsarme Bewegung des abgewickelten Bandes entlang der Führungselemente 5,9 in die Trennvorrichtung 6, insbesondere die Schere, gewährleistet. Die hier dargestellte Rollenförderung erlaubt zudem ein aktives Fördern des Bandendes in die Schere 6, wodurch eine Haftreibung zwischen dem Führungselement 9 und dem Metallband nicht vorhanden ist. Vorzugsweise sollte zur Verringerung des Verschleißes eine Abstimmung der Geschwindigkeiten der Rollen innerhalb der Rollenführung und des Bandes erfolgen.

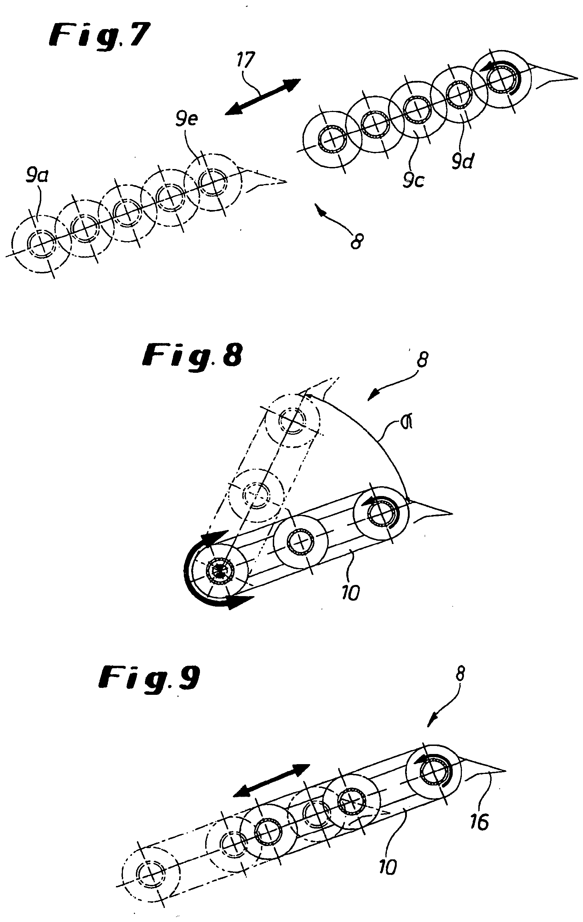

Figur 7 zeigt eine weitere Ausführungsform eines anstellbaren Elements 8 gemäß der Erfindung, wobei analog zur Ausführungsform gemäß Figur 6 fünf Rollen 9a-9e auf einem Scheibenrollentisch angeordnet sind. Dieser Scheibenrollentisch ist anders als in der Ausführungsform gemäß Figur 6 nicht schwenkbar gelagert, sondern entlang des Pfeils 17 aus seiner (gestrichelt dargestellten) Ausgangsposition in seine Betriebsposition anliegend an dem (nicht dargestellten) Coil verschiebbar vorgesehen.

Figur 8 zeigt eine zweite Ausführungsform eines anstellbaren Elements gemäß der Erfindung, bei dem anders als in den Ausführungsformen gemäß den Figuren 6 und 7 anstelle von Scheibenrollen Ketten 10 zur Führung des Metallbandes in die (nicht dargestellte) Trennvorrichtung und zur Reduzierung der Reibung sowie zum Antrieb des Metallbandes dienen. Es können hierbei sämtliche Glieder- und Gelenkketten eingesetzt werden, beispielsweise Rollenketten, Zahnketten, Scharnierband- und Plattenketten sowie Kratzbogenketten. Auch hierdurch wird ein aktives Fördern des Bandendes in die Trennvorrichtung, insbesondere die Schere, ermöglicht, wodurch eine Haftreibung zwischen dem anstellbaren Element 8 und dem (nicht dargestellten) Band nicht mehr vorhanden ist, zumindest jedoch minimiert wird.

Figur 9 zeigt analog zur Ausführungsform gemäß Figur 7 die Linearführung des anstellbaren Elements 8 mit Kettentrieb 10 aus einer (gestrichelt dargestellten) Ausgangsposition entlang des Pfeils 17 in die Betriebsposition, bei der das Abschälelement 16 anliegend an das (nicht dargestellte) Coil geführt wird. Auch in diesem Fall sollte zur Vermeidung von unnötigem Verschleiß eine Abstimmung der Geschwindigkeiten zwischen Kettenführung und dem vom Coil abgewickelten Band erfolgen.

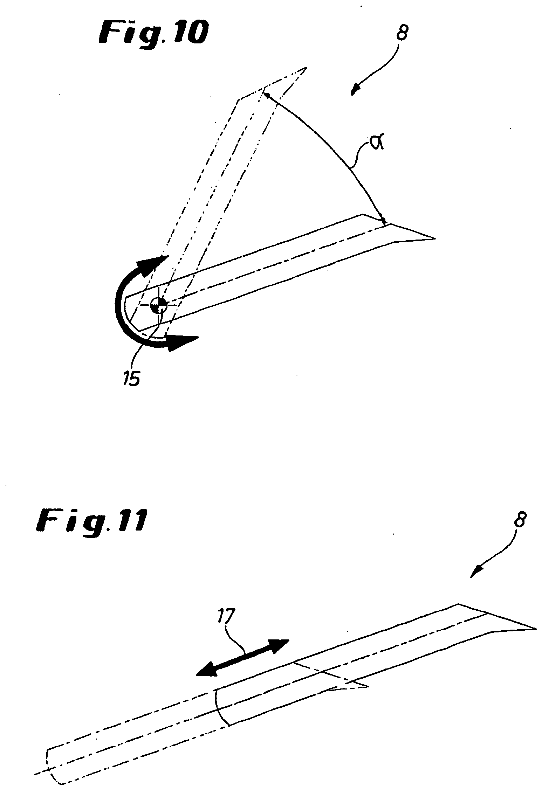

Figur 10 zeigt eine dritte Ausführungsform eines anstellbaren Elements 8 gemäß der Erfindung, wobei in dieser Ausführungsform ein Schwenktisch über einen Schwenkwinkel α aus seiner (gestrichelt dargestellten) Ausgangsposition in seine Betriebsposition um die Schwenkachse 15 herum verschwenkt werden kann. Der Schwenktisch weist eine Beschichtung oder ein Gleitelement (beispielsweise Platten oder Schienen) auf, um eine möglichst reibungsarme oder reibungsfreie Führung mit gut gleitenden Eigenschaften für das Metallband in die (nicht dargestellte) Trennvorrichtung vorzusehen. Besonders bevorzugt wird eine Beschichtung unter Einsatz von Keramiken, Spritzbeschichtungen oder Sinterwerkstoffen, um die gewünschten reibungsarmen Eigenschaften zu erzielen.

Figur 11 zeigt analog zu den Ausführungsformen gemäß den Figuren 6 bis 9 ein anstellbares Element 8, das anders als in der Ausführungsform gemäß Figur 10 nicht schwenkbar, sondern entlang des Pfeils 17 linear verschiebbar aus der (gestrichelt dargestellten) Ausgangsposition in die Betriebsposition geführt wird. In beiden Fällen wird durch die Reduzierung der Reibung aufgrund der guten Gleiteigenschaften die Reibung zwischen dem anstellbaren Element 8 und dem (nicht dargestellten) Band stark reduziert.

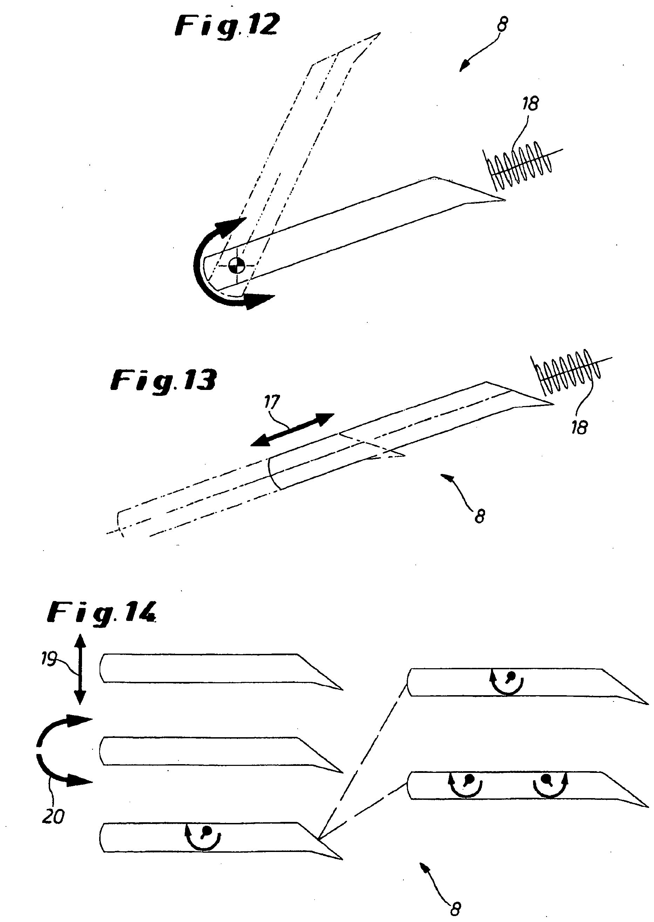

Figur 12 zeigt eine weitere Einsatzmöglichkeit der Ausführungsform gemäß Figur 10, wobei das anstellbare Element 8 zumindest in seiner Betriebsposition zu Schwingungen 18 angeregt wird, um die Reibung, insbesondere die Haftreibung zwischen dem anstellbaren Element 8 und dem (nicht dargestellten) Band zu reduzieren.

Figur 13 zeigt analog zu den Ausführungsformen gemäß den Figuren 6 bis 11 eine Linearführung des anstellbaren Elements 8 entlang des Pfeils 17, wobei der hier dargestellte Verfahrtisch ebenfalls in Schwingungen 18 versetzt werden kann, um die Haftreibung zu reduzieren.

Figur 14 zeigt verschiedene Möglichkeiten der Schwingungsarten / Erregungen, in die das anstellbare Element 8 in der Form eines Schwenk- oder Verfahrtisches überführt werden kann. Zum einen können rein translatorische Bewegungen entlang des Pfeils 19 oder rotatorische Bewegungen entlang des Pfeils 20 auf das anstellbare Element 8 aufgebracht werden. In einer weiteren und bevorzugten Ausgestaltungsform der Erfindung erfolgt die Erregung des anstellbaren Elements 8 jedoch durch eine Unwucht, die sowohl einachsig als auch mehrachsig vorliegen kann. In jedem Fall aber wird durch die Aufbringung von Schwingungen auf das anstellbare Element 8 die Haftreibung deutlich reduziert. Es versteht sich hierbei von selbst, dass die Ausführungsformen gemäß den Figuren 6 bis 14 auch in geeigneter Weise miteinander kombiniert werden können, um die gewünschten Effekte zu erzielen oder zu verstärken.

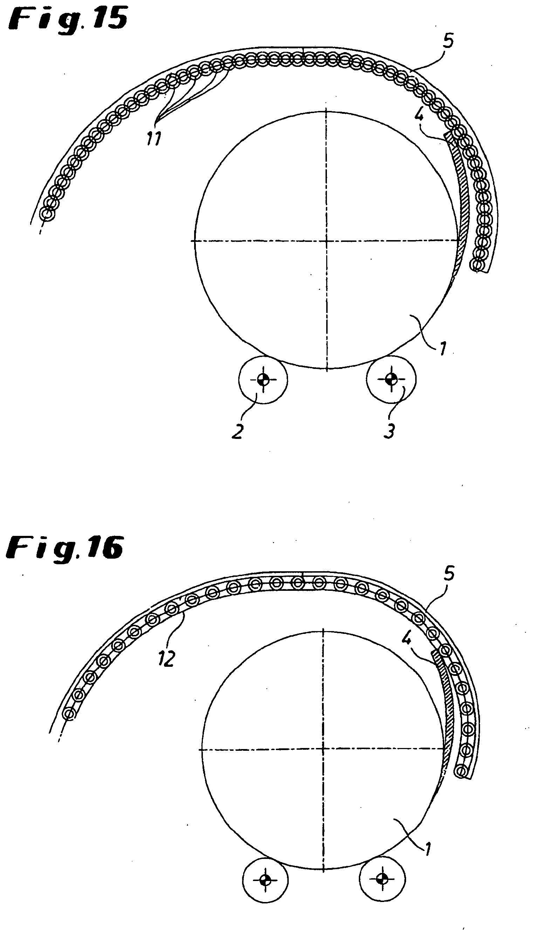

Figur 15 zeigt eine zweite Ausführungsform einer erfindungsgemäßen Vorrichtung zur Probenentnahme von gewalzten und zu einem Coil 1 aufgewickelten Metallband, wobei in der üblichen Weise das Coil 1 auf Muldenrollen 2, 3 abgelegt ist. Das vorauseilende Ende 4 des Metallbandes besteht aus einem ultrahochfesten Stahl und federt somit elastisch von der Außenseite des Coils 1 gegen die Außenführung 5 zurück. Um die Reibung zwischen dem Ende 4 und der Außenführung 5 zu verringern, ist an der Innenseite der Außenführung 5 eine Vielzahl von Rollen 11 angeordnet, entlang derer das vorauseilende Ende 4 des Metallbandes nahezu reibungsfrei entlang der gesamten Außenführung 5 auf die (nicht dargestellte) Trennvorrichtung hin geführt werden kann. Hierdurch wird nicht nur die Zuführung zur (nicht dargestellten) Schere gewährleistet, es wird zudem auch ein zu großes Auffedern des Metallbandes verhindert. Es wird hierdurch ein aktives Fördern des Bandendes in die Schere gewährleistet, wobei gleichzeitig die Haftreibung zwischen der Außenführung 5 als Führungselement und dem Band nicht mehr vorhanden ist. Zu diesem Zweck wird die Außenführung 5 mit Scheibenrollen 11 versehen, wobei im Falle eines aktiven Antriebs vorzugsweise eine Abstimmung der Geschwindigkeiten zwischen der Führung durch die Rollen 11 und der Führung des Bandes durch den Antrieb der Muldenrollen 2, 3 erfolgen sollte.

Figur 16 zeigt eine schematische Seitenansicht einer dritten Ausführungsform einer erfindungsgemäßen Vorrichtung zur Probenentnahme von gewalzten und zu einem Coil 1 aufgewickelten Metallbändern, wobei der Aufbau analog zu der zweiten Ausführungsform gemäß Figur 15 ist. Anders als in der Ausführungsform gemäß Figur 15 sind an der Innenseite der Außenführung 5 jedoch keine Scheibenrollen angebracht, sondern ein Kettentrieb, beispielsweise in der Form von Platten- oder Scharnierbandketten, über den ein reibungsfreier Transport des voreilenden Endes 4 des Metallbandes entlang der Außenführung 5 zur Probenentnahme erfolgen kann. Im Falle von angetriebenen Ketten erfolgt ein aktives Fördern des Bandendes 4 in die (nicht dargestellte) Schere hinein, wobei die Haftreibung zwischen der Außenführung 5 und dem Metallband nicht mehr vorhanden ist. Auch in diesem Fall sollte zur Minderung des Verschleißes bei angetriebenen Kettengliedern eine Abstimmung der Geschwindigkeiten zwischen der Führung der Ketten 12 und dem Antrieb des Metallbandes erfolgen.

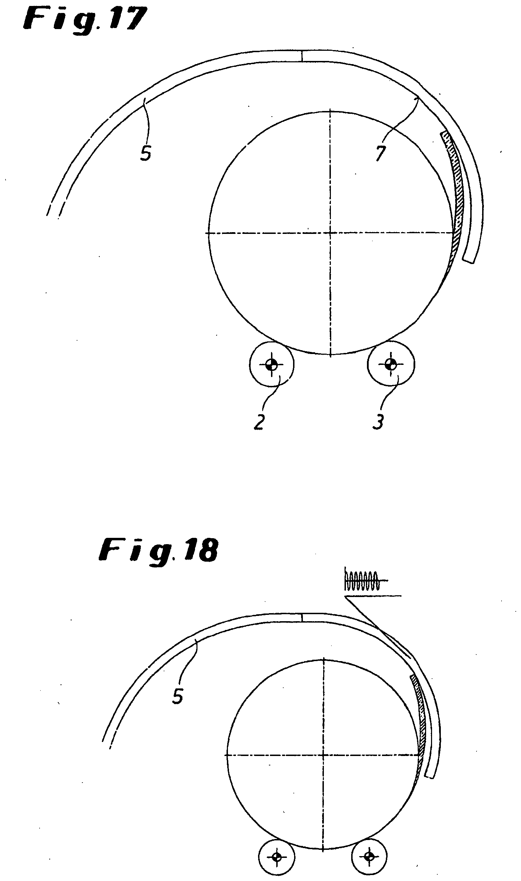

Figur 17 zeigt eine schematische Seitenansicht einer vierten Ausführungsform der Vorrichtung zur Probenentnahme gemäß der Erfindung, deren prinzipieller Aufbau mit Muldenrollen 2, 3 und Außenführung 5 den zweiten und dritten Ausführungsformen gemäß den Figuren 15 und 16 entspricht. An der Innenseite der Außenführung 5 sind jedoch keine Scheibenrollen oder Ketten angeordnet, das hier verwendete Mittel zur Verminderung der Reibung 7 besteht vielmehr aus einer Beschichtung oder Gleitelementen, beispielsweise in der Form von Platten oder Schienen. Hierdurch werden gute gleitende Eigenschaften gewährleistet, die beispielsweise unter Einsatz von Keramiken, Spritzbeschichtungen oder Sinterwerkstoffen in dem Fachmann leicht zugänglicher Weise erreicht werden können. Auch in diesem Fall wird die Reduzierung der Reibung durch gute Gleiteigenschaften bewirkt, wobei die Reibung zwischen der Außenführung 5 und dem Band stark reduziert wird.

Figur 18 zeigt eine weitere Modifikation der vierten Ausführungsform der Erfindung, wie sie in Figur 17 dargestellt ist. Zur weiteren Reduzierung der Reibung zwischen dem Metallband und der Außenführung 5 kann diese zum Schwingen angeregt werden, wodurch die Haftreibung zwischen der Außenführung 5 und dem Band auf die Gleitreibung reduziert wird.

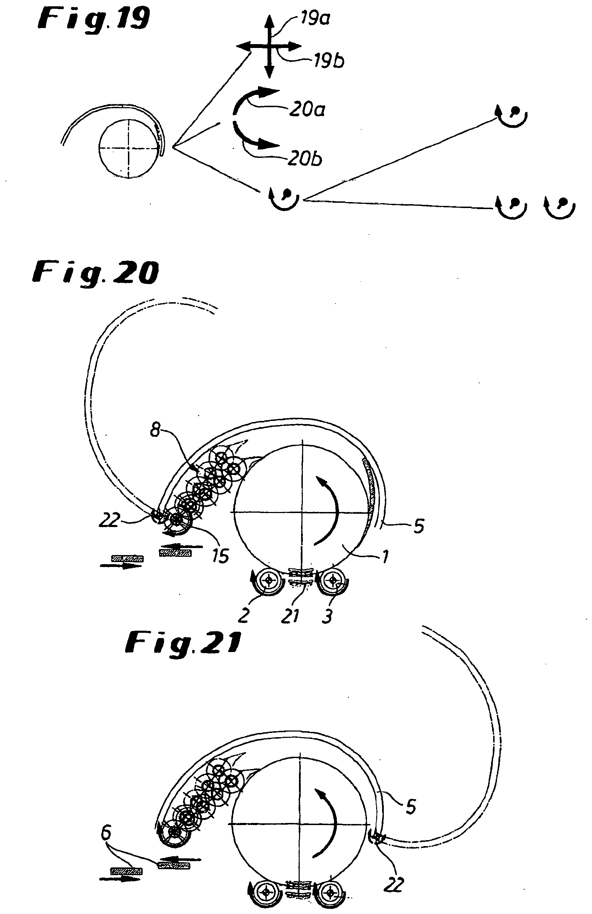

Figur 19 zeigt die hier möglichen Schwingungsmodi, nämlich einerseits translatorische Schwingungen in Richtung der Pfeile 19a, 19b oder rotatorische Schwingungen in Richtung der Pfeile 20a, 20b. Schließlich können auch Schwingungen durch Unwucht den gewünschten Effekt bewirken, wobei diese Unwucht-Schwingungen sowohl einachsig als auch mehrachsig ausgestaltet sein können. In jedem Fall aber wird die Reduzierung der Reibung durch die Schwingung der Außenführung 5 erreicht.

Figur 20 zeigt eine schematische Seitenansicht einer fünften Ausführungsform der Vorrichtung zur Probenentnahme gemäß der Erfindung. Insbesondere zum leichteren Betrieb vor allem beim Einführen und Herausnehmen des Coils aus der Muldenrollenstation, gebildet durch die Muldenrollen 2, 3 sowie den Coiltransportsattel 21, ist ein leichter Zugang zur Muldenrollenstation auch im Kranbetrieb erwünscht. Zu diesem Zweck ist nicht nur das anstellbare Element 8 schwenkbar um die Schwenkachse 15 gelagert, sondern ebenso die Außenführung 5 schwenkbar aus der Betriebsposition in eine (gestrichelt dargestellte) Coilbergeposition. Beim Verschwenken der Außenführung 5 um die Schwenkachse 22 herum ist ein ungehinderter Zugang beispielsweise eines Krans von oben zum Coil 1 möglich. Gleichzeitig kann die erfindungsgemäße Vorrichtung mit besonders einfachen Mitteln leicht wieder nach dem Einsetzen eines neuen Coils 1 in die Muldenrollenstation in Betrieb gesetzt werden.

Figur 21 zeigt eine sechste Ausführungsform der Vorrichtung zur Probenentnahme gemäß der Erfindung, wobei analog zur Ausführungsform gemäß Figur 20 die Außenführung 5 aus der Betriebsposition in eine (nicht dargestellte) Coilbergeposition verschwenkt werden kann. Die Schwenkachse 22 für die Außenführung 5 ist anders als in der fünften Ausführungsform gemäß Figur 20 am Eingangsbereich der Außenführung 5 für das (nicht dargestellte) Metallband angeordnet. Auch in diesem Fall jedoch kann durch Verschwenken der Außenführung 5 das Umsetzen eines Coils 1 auch im Kranbetrieb von oben leicht bewirkt werden.

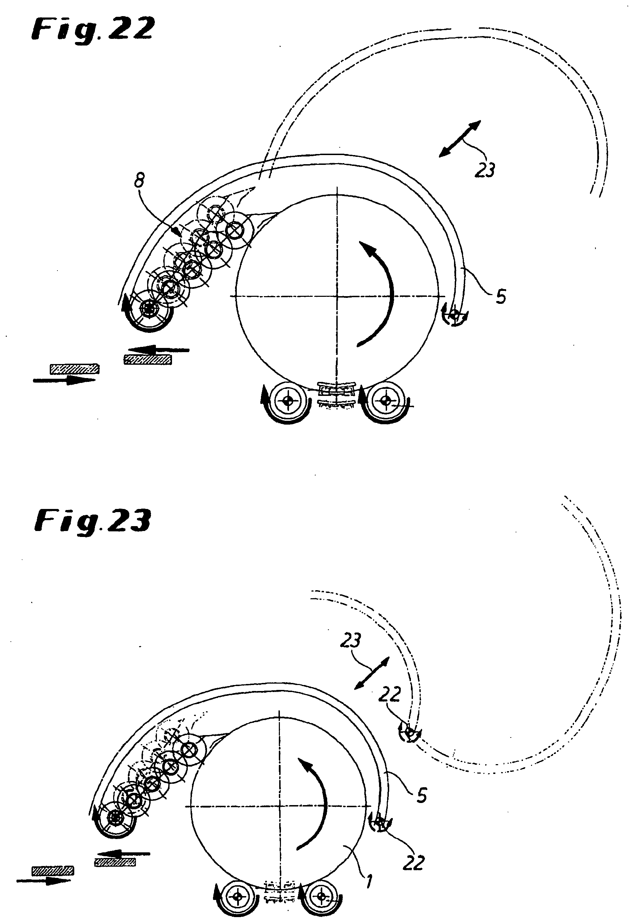

Figur 22 zeigt eine siebte Ausführungsform der Vorrichtung zur Probenentnahme gemäß der Erfindung, wobei in dieser Ausführungsform die Außenführung 5 translatorisch entlang des Pfeils 23 aus der Betriebsposition in die (gestrichelt dargestellte) Außenposition verfahren werden kann.

Figur 23 zeigt eine achte Ausführungsform der Vorrichtung zur Probenentnahme gemäß der Erfindung, welche dadurch gekennzeichnet ist, dass die Außenführung 5 sowohl translatorisch über den Verfahrweg 23 als auch geschwenkt um die Achse 22 aus der Betriebsposition in die (gestrichelt dargestellte) Außenposition verbracht werden kann, um einen sicheren Zugang zum in der Muldenrollenstation gelagerten Coil 1 auch im Kranbetrieb zu erlauben. Es versteht sich von selbst, dass die Verwendung der Verfahrantriebe und Drehgelenke beliebig je nach erforderlicher Situation ausgewählt werden kann.

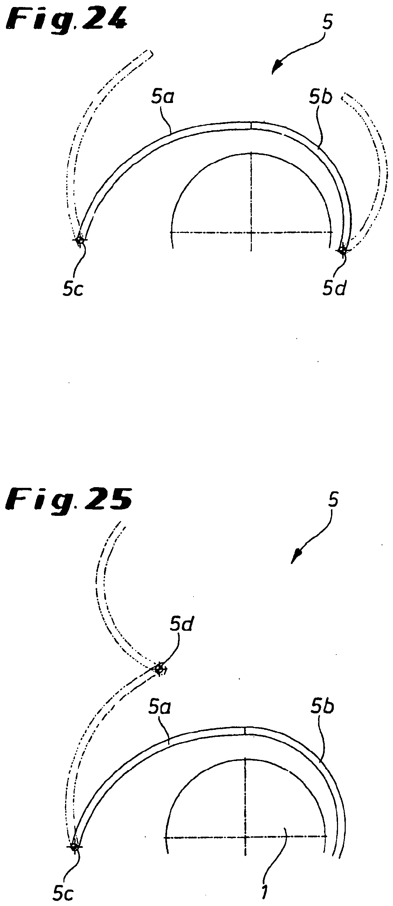

Figur 24 zeigt eine weitere Ausgestaltungsform einer Außenführung 5, die in der hier dargestellten Form aus zwei unabhängig voneinander verfahrbaren Außenführungselementen 5a, 5b besteht. Die Außenführungselemente 5a, 5b sind jeweils schwenkbar um ihre jeweiligen Schwenkachsen 5c, 5d angeordnet und können somit entweder einzeln oder miteinander gekoppelt aus ihrer Betriebsposition verschwenkt werden.

Figur 25 zeigt ein weitere Ausgestaltungsform der Außenführung 5, bei der das Verschwenken aus der Betriebsposition in eine (gestrichelt dargestellte) Außenposition über das Verschwenken der Außenführungselemente 5a, 5b über deren Schwenkachsen 5c, 5d erfolgt. Insgesamt bewirkt die Teilung der Außenführung 5 einen leichten Zugang zum Coil 1 innerhalb der erfindungsgemäßen Vorrichtung.

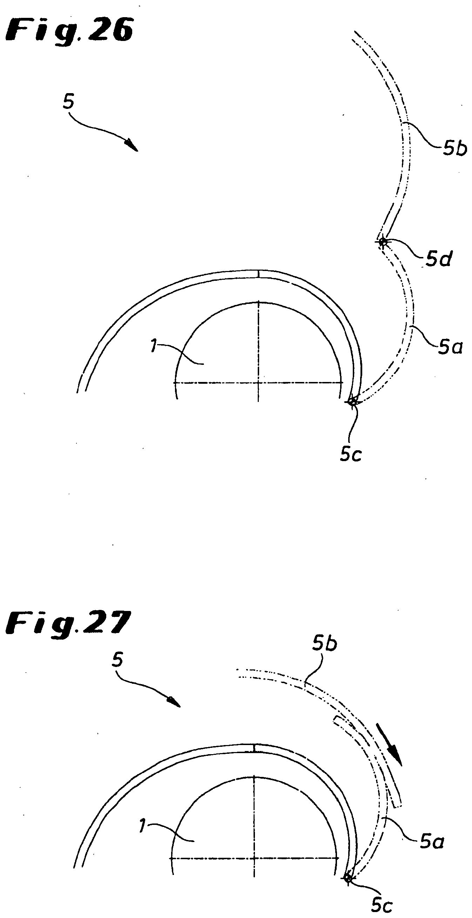

Figur 26 zeigt eine weitere Ausgestaltungsform einer Außenführung 5 als Bestandteil einer erfindungsgemäßen Vorrichtung zur Probenentnahme, bei der analog zu der Ausführungsform gemäß Figur 25 die Außenführungselemente 5a, 5b miteinander gekoppelt über Schwenkachsen 5c, 5d aus der Betriebsposition um das Coil 1 herum wegverschwenkt werden können. Dabei ist das Außenführungselement 5b abhängig und gekoppelt schwenkbar mit dem Außenführungselement 5a verbunden.

Figur 27 zeigt eine weitere Ausgestaltungsform einer Außenführung 5 als Bestandteil einer erfindungsgemäßen Vorrichtung zur Probenentnahme, wobei in dieser Ausführungsform die Außenführung 5 ebenfalls teilbar aus Außenführungselementen 5a, 5b besteht. Zum besseren Zugang zu dem Coil 1 erfolgt eine kombinierte Bewegung beider Außenführungselemente 5a, 5b über die Verschwenkung der Außenführung 5 insgesamt um die Schwenkachse 5c herum sowie ein Verfahren des Außenführungselements 5b entlang der gekrümmten Außenseite des Außenführungselements 5a.

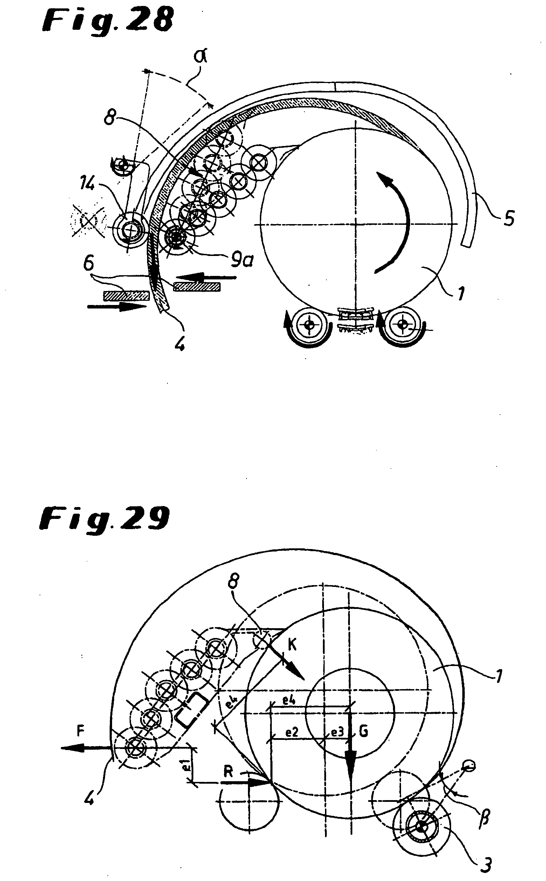

Figur 28 zeigt eine schematische Seitenansicht einer neunten Ausführungsform der erfindungsgemäßen Vorrichtung zur Probenentnahme, die insbesondere den Einschub des voreilenden Endes 4 des Metallbandes in die Schere 6 erleichtert. Das Metallband mit einer Dicke deutlich oberhalb von 12 mm wird entlang der Außenführung 5, die in der dargestellten Ausführungsform eine gleitende Innenbeschichtung 7 aufweist, von dem Coil 1 auf die Trennvorrichtung 6 hin abgewickelt. Um einen sicheren Eintritt des vorauseilenden Endes 4 des Metallbandes in die Schere 6 zu gewährleisten, wird eine Treiberrolle 14 über einen Schwenkwinkel α an das Metallband angestellt, so dass dieses zwischen der Treiberrolle 14 und der Rolle 9a des anstellbaren Elements 8 nicht nur geführt, sondern durch diese auch angetrieben wird. Es versteht sich von selbst, dass auch die hier dargestellten Elemente gemäß der neunten Ausführungsform in geeigneter Weise mit einzelnen Komponenten der anderen Ausführungsformen kombiniert werden können, um die bewirkbaren Effekte zu erzielen oder zu verstärken.

Figur 29 schließlich zeigt schematisch eine Seitenansicht einer zehnten Ausführungsform der Vorrichtung zur Probenentnahme gemäß der Erfindung, bei der zumindest die rechte Muldenrolle 3 um einen Winkel β aus der Ursprungsposition schwenkbar gelagert ist. Aufgrund der auf das Coil 1 einwirkenden Kräfte bei der Probenentnahme, nämlich die erforderliche Kraft F zum Aufdehnen des Bandanfangs, welche im Wesentlichen von dem anstellbaren Element 8 auf das Coil 1 aufgebracht wird, die Reaktionskraft R zu F, das Bundgewicht G, die Kraft der neuen Andrückrolle im Bundöffner K sowie den einwirkenden Hebelarm der Bandöffnungskraft e1, den Hebelarm des Bundgewichts ohne schwenkbare Bundlagerung e2, dem zusätzlichen Hebelarm durch das Verschwenken der Bundlagerung e3, den neuen Hebelarm e4 sowie den Hebelarm der Andrückrolle des Bundöffners e5, ergibt die Reaktionskraft aus dem Coil auf die linke Muldenrolle 2 R im Zusammenhang mit dem Hebel e1 ein Drehmoment, das das Coil aus der Muldenrollenstation nach links in der Figur herausdrückt. Durch die schwenkbare Anordnung der Muldenrolle 3 wird das stabilisierende Moment durch einen zusätzlichen Hebelarm e3 vergrößert. Durch diese vorteilhafte Konstruktion können Coils 1 mit einem deutlich kleineren Durchmesser ebenfalls in der erfindungsgemäßen Vorrichtung zur Probenentnahme automatisch geprobt werden.

## Patentansprüche

1. Vorrichtung zur Probenentnahme von gewalzten und zu einem Coil (1) aufgewickelten Metallbändern, insbesondere im Dickenbereich von >12 mm, mit einer Coildreheinrichtung und einer Trennvorrichtung (6) zum Abtrennen der Probe aus dem Metallband (4),
wobei die Coildreheinrichtung wenigstens zwei im unteren Quadranten des auf der Coildreheinrichtung aufliegenden Coils (1) angeordnete drehbare Auflager (2, 3), vorzugsweise Muldenrollen, sowie eine Außenführung (5) für das Metallband aufweist,
**dadurch gekennzeichnet, dass**
die Außenführung (5) in dem Bereich in Abwickelrichtung des Metallbandes hinter dem letzten Auflager (3) einen Teilumfang des Coils (1) von mehr als 180° überspannt und mit die Reibung des Metallbandes an der Innenseite der Außenführung (5) mindernden Mitteln (7) versehen ist.

2. Vorrichtung gemäß Anspruch 1, **dadurch gekennzeichnet, dass** in Abwickelrichtung des Metallbandes vor der Trennvorrichtung (6) wenigstens ein anstellbares Element (8) zum Einführen des vorauseilenden Endes (4) des Metallbandes in die Trennvorrichtung (6) angeordnet ist.

3. Vorrichtung gemäß Anspruch 2, **dadurch gekennzeichnet, dass** das anstellbare Element (8) wenigstens eine an das Metallband anschwenkbare Rolle (9) umfasst.

4. Vorrichtung gemäß Anspruch 2, **dadurch gekennzeichnet, dass** das abstellbare Element (8) wenigstens eine an das Metallband anschwenkbare Kette (10) umfasst.

5. Vorrichtung gemäß einem der voranstehenden Ansprüche, **dadurch gekennzeichnet, dass** die Außenführung (5) die Form eines Außenkäfigs oder einer Abdeckung für die Vorrichtung aufweist.

6. Vorrichtung gemäß einem der voranstehenden Ansprüche, **dadurch gekennzeichnet, dass** die Außenführung (5) zentriert über dem Teilumfang des Coils (1) von dem in Abwickelrichtung des Metallbandes letzten Auflager (3) bis zur Trennvorrichtung (6) angeordnet ist, vorzugsweise diesen Teilumfang des auf der Coildreheinrichtung aufliegenden Coils (1) im Wesentlichen vollständig überdeckt.

7. Vorrichtung gemäß einem der voranstehenden Ansprüche, **dadurch gekennzeichnet, dass** die die Reibung des Metallbandes an der Innenseite der Außenführung (5) mindernden Mittel (7) wenigstens eine Rolle (11) oder Kette (12) aufweisen.

8. Vorrichtung gemäß einem der voranstehenden Ansprüche, **dadurch gekennzeichnet, dass** die Außenführung (5) zumindest in Teilbereichen an das auf der Coildreheinrichtung aufliegende Coil (1) anstellbar ausgeführt ist.

9. Vorrichtung gemäß einem der voranstehenden Ansprüche, **dadurch gekennzeichnet, dass** zumindest eines der drehbaren Auflager (2,3) in seiner Ortslage variabel, vorzugsweise schwenkbar, ausgestaltet ist.

10. Vorrichtung gemäß einem der voranstehenden Ansprüche, **dadurch gekennzeichnet, dass** die Trennvorrichtung (6) im Teilumfang vor dem in Abwickelrichtung des Coils (1) ersten Auflager (2), vorzugsweise innerhalb eines Teilumfang des Coils (1) von nicht mehr als 90°, angeordnet ist.

11. Verfahren zur Probenentnahme von gewalzten und zu einem Coil (1) aufgewickelten Metallbändern, insbesondere im Dickenbereich von > 12 mm, mit einer Coildreheinrichtung und einer Trennvorrichtung (6) zum Abtrennen der Probe aus dem Metallband mittels einer Vorrichtung gemäß den Ansprüchen 1 bis 10, wobei das Coil (1) in der Coildreheinrichtung auf wenigstens zwei im unteren Quadranten des auf der Coildreheinrichtung aufliegenden Coils (1) angeordneten drehbaren Auflagern, vorzugsweise Muldenrollen, aufliegt und durch Drehung der drehbaren Auflager (2, 3) abgewickelt wird, **dadurch gekennzeichnet, dass** von dem Coil (1) oberschlägig ein vorauseilendes Bandende weitestgehend zwangsfrei in einem Raum (13) zwischen dem Coil (1) und einer Außenführung (5) für das Metallband einer Trennvorrichtung (6) zur Probenentnahme zugeführt wird.

12. Verfahren gemäß Anspruch 11, **dadurch gekennzeichnet, dass** es zur Probenentnahme bei Metallbändern aus normalen Baustählen, hochfesten Stählen und ultrahochfesten Stählen dient.

13. Verfahren gemäß Anspruch 12, **dadurch gekennzeichnet, dass** der radiale Abstand zwischen dem Coil (1) und der Außenführung (5) so einstellbar ist, dass ein Kontakt zwischen dem vorauseilenden Bandende (4) des abgewickelten Metallbandes und der Außenführung (5) nur bei der Probenentnahme von Metallband aus ultrahochfesten Stählen erfolgt.

## Claims

1. A device for taking samples from metal strips that have been rolled and wound into a coil (1), particularly in the thickness range of > 12 mm, with a coil rotating device and a separating device (6) for separating the sample from the metal strip (4),
wherein the coil rotating device has at least two rotatable supports (2, 3), preferably trough rollers, disposed in the bottom quadrant of the coil (1) mounted on the coil rotating device, and an outer guide (5) for the metal strip,
**characterized in that**
the outer guide (5) spans a part of the circumference of the coil (1) over more than 180° in the area behind the last support (3) in the unwinding direction of the metal strip, and is furnished with friction reducing means (7) on the inside of the outer guide (5).

2. The device according to claim 1, **characterized in that** at least one adjustable element (8) is disposed before the separating device (6) in the unwinding direction of the metal strip for introducing the leading end (4) of the metal strip into the separating device (6).

3. The device according to claim 2, **characterized in that** the adjustable element (8) comprises at least one roller (9) that can be swivelled against the metal strip.

4. The device according to claim 2, **characterized in that** the adjustable element (8) comprises at least one chain (10) that can be swivelled against the metal strip.

5. The device according to any one of the preceding claims, **characterized in that** the outer guide (5) has the shape of an outer cage or cover for the device.

6. The device according to any one of the preceding claims, **characterized in that** the outer guide (5) is disposed centrally above the partial circumference of the coil (1) from the last support (3) in the unwinding direction of the metal strip as far as the separating device (6), and preferably substantially covering said circumferential part of the coil (1) that rests on the coil rotating device.

7. The device according to any one of the preceding claims, **characterized in that** the means (7) for reducing friction of the metal strip on the inside of the outer guide (5) include at least one roller (11) or chain (12).

8. The device according to any one of the preceding claims, **characterized in that** the outer guide (5) is designed so that at least partial regions thereof are adjustable against the coil (1) supported on the coil rotating device.

9. The device according to any one of the preceding claims, **characterized in that** the spatial alignment of at least one of the rotatable supports (2, 3) can be varied, preferably pivoted.

10. The device according to any one of the preceding claims, **characterized in that** the separating device (6) is disposed in the partial circumference before the first support (2) in the unwinding direction of the coil (1), preferably within a partial circumference of the coil (1) not exceeding 90°.

11. A method for taking samples from metal strips that have been rolled and wound into a coil (1), particularly in the thickness range of > 12 mm, with a coil rotating device and a separating device (6) for separating the sample from the metal strip, preferably by means of a device according to claims 1 to 10, wherein the coil (1) in the coil rotating device is supported on at least two rotatable supports, preferably trough rollers, disposed in the bottom quadrant of the coil (1) mounted on the coil rotating device (1), and is unwound by rotating the rotatable supports (2, 3), **characterized in that** a leading end of the strip is fed under minimum tension from the top of coil (1) to a separating device (6) in a space (13) between the coil (1) and an outer guide (5) for the metal strip so that a sample can be taken.

12. The method according to claim 11, **characterized in that** it is used for taking samples of metal strips from normal structural steels, high strength steels and ultra high strength steels.

13. The method according to claim 12, **characterized in that** the radial distance between the coil (1) and the outer guide (5) is adjustable such that contact between the leading end (4) of the unwound metal strip and the outer guide (5) only occurs when metal strip samples are taken from ultra high-strength steels.

## Revendications

1. Dispositif de prélèvement d'échantillons de bandes métalliques laminées et enroulées en boucle (1), en particulier d'une épaisseur de l'ordre de > 12 mm, comprenant un dispositif de tournage de boucle et un dispositif de coupe (6) pour sectionner l'échantillon dans la bande métallique (4),
le dispositif de tournage de boucle présentant au moins deux supports rotatifs (2, 3) disposés dans le quadrant inférieur de la boucle reposant sur le dispositif de tournage de boucle (1), de préférence des rouleaux à auges, et un guide extérieur (5) pour la bande métallique,
**caractérisé en ce que**
le guide extérieur (5) surmonte, dans la zone située dans le sens du déroulement de la bande métallique, en aval du dernier support (3), une partie de la circonférence de la boucle (1) de plus de 180° et est équipé de moyens (7) réduisant la friction de la bande métallique sur la face interne du guide extérieur (5).

2. Dispositif selon la revendication 1, **caractérisé en ce que**, dans le sens de déroulement de la bande métallique, en amont du dispositif de coupe (6), au moins un élément réglable (8) est disposé pour introduire l'extrémité meneuse (4) de la bande métallique dans le dispositif de coupe (6).

3. Dispositif selon la revendication 2, **caractérisé en ce que** l'élément réglable (8) comprend au moins un rouleau (9) pouvant pivoter au niveau de la bande métallique.

4. Dispositif selon la revendication 2, **caractérisé en ce que** l'élément réglable (8) comprend au moins une chaîne (10) pouvant pivoter au niveau de la bande métallique.

5. Dispositif selon une des revendications précédentes, **caractérisé en ce que** le guide extérieur (5) présente la forme d'une cage extérieure ou d'un recouvrement pour le dispositif.

6. Dispositif selon une des revendications précédentes, **caractérisé en ce que** le guide extérieur (5) est disposé centré sur la partie de la circonférence de la boucle (1) depuis le dernier support dans le sens du déroulement de la bande métallique (3) jusqu'au dispositif de coupe (6), de préférence en recouvrant sensiblement entièrement cette partie de la circonférence reposant sur le dispositif de tournage de boucle (1).

7. Dispositif selon une des revendications précédentes, **caractérisé en ce que** les moyens (7) réduisant la fiction de la bande métallique sur la face interne du guide extérieur (5) comprennent au moins un rouleau (11) ou une chaîne (12).

8. Dispositif selon une des revendications précédentes, **caractérisé en ce que** le guide extérieur (5) est réalisé de manière à être réglable au moins dans des zones partielles au niveau de la boucle (1) reposant sur le dispositif de tournage de boucle.

9. Dispositif selon une des revendications précédentes, **caractérisé en ce qu'**au moins un des supports rotatifs (2, 3) est conçu pour être variable, de préférence pivotable, à son emplacement.

10. Dispositif selon une des revendications précédentes, **caractérisé en ce que** le dispositif de coupe (6) est disposé dans la partie de la circonférence en amont du premier support (2) dans le sens de déroulement de la boucle (1), de préférence dans une partie de la circonférence de la boucle (1) ne représentant pas plus de 90°.

11. Procédé de prélèvement d'échantillons de bandes métalliques laminées et enroulées en boucle (1), en particulier d'une épaisseur de l'ordre de > 12 mm, comprenant un dispositif de tournage de boucle et un dispositif de coupe (6) pour sectionner l'échantillon dans la bande métallique au moyen d'un dispositif selon les revendications 1 à 10, dans lequel la boucle (1) repose, dans le dispositif de tournage de boucle, sur au moins deux supports rotatifs disposés dans le quadrant inférieur de la boucle (1) reposant sur le dispositif de tournage de boucle, de préférence des rouleaux à auges, et est déroulée par rotation des supports rotatifs (2, 3), **caractérisé en ce que**, par le haut de la boucle (1), une extrémité meneuse de la bande est acheminée dans une large mesure sans contrainte dans un espace (13) situé entre la boucle (1) et un guide extérieur (5) de bande métallique d'un dispositif de coupe (6) pour le prélèvement d'échantillons.

12. Procédé selon la revendication 11, **caractérisé en ce qu'**il sert aux prélèvements d'échantillons sur des bandes métalliques composées d'aciers de construction normaux, d'aciers très résistants et d'aciers ultrarésistants.

13. Procédé selon la revendication 12, **caractérisé en ce que** la distance radiale entre la boucle (1) et le guide extérieur (5) est réglable de manière à ce qu'un contact entre l'extrémité meneuse de bande (4) de la bande métallique déroulée et le guide extérieur (5) n'ait lieu que lors du prélèvement d'échantillons de bandes métalliques composées d'aciers ultrarésistants.
